# EUROPEAN PATENT SPECIFICATION

(11) **EP 3 916 212 B1**
(45) Date of publication and mention of the grant of the patent: **28.09.2022**
(21) Application number: 20177135.9
(22) Date of filing: 28.05.2020
(51) Int. Cl.: F02K 9/52

(54) **INJECTION ELEMENT FOR AN ENGINE, FRONT PLATE FOR AN INJECTOR HEAD AND METHOD FOR MANUFACTURING AN INJECTION ELEMENT**
EINSPRITZELEMENT FÜR EINEN MOTOR, FRONTPLATTE FÜR EINEN EINSPRITZKOPF UND VERFAHREN ZUR HERSTELLUNG EINES EINSPRITZELEMENTS
ÉLÉMENT D'INJECTION POUR MOTEUR, PLAQUE AVANT POUR UNE TÊTE D'INJECTEUR ET PROCÉDÉ DE FABRICATION D'UN ÉLÉMENT D'INJECTION

(43) Date of publication of application: 01.12.2021
(73) Proprietor: ArianeGroup GmbH, 82024 Taufkirchen (DE)
(72) Inventor: Birck, Torben, 82024 Taufkirchen (DE); Geyer, Marc, 81547 München (DE); Götz, Andreas, 85591 Vaterstetten (DE); Schuhbaur, Manuel, 81735 München (DE)
(74) Representative: Schornack, Oliver

(56) References cited:
- CN-U- 209 637 902
- DE-A1-102004 006 665
- FR-A- 1 587 029
- US-A- 4 801 092

## Description

The invention relates to an injection element for an engine, such as a rocket engine, and further relates to a front plate for an injector head having an injection element as well as a method for manufacturing an injection element. Particularly, the invention relates to an injection element comprising a plurality of bores, each intersecting with at least one fuel duct and further intersecting with another bore of the plurality of bores. The invention further relates to a front plate for an injector head comprising at least one injection element, and a method for manufacturing an injection element including machining the plurality of bores.

A rocket engine, and particularly a combustion chamber of such rocket engine, usually includes injection elements with two outlets for injecting respective fuel components into the combustion chamber. In order to achieve a uniform distribution of the fuel components in the combustion chamber, a plurality of injection elements is provided. Such injection elements are arranged at or in a front plate of an injector head, which is arranged opposite of a nozzle of the rocket engine. For instance, DE 10 2004 018 725 A1 and DE 10 2017 127 831 A1 disclose a front plate of an injector head, which includes a plurality of tubular injection elements for guiding a fuel into an interior of the combustion chamber. The tubular injection elements are surrounded by a coaxial sleeve or form an annulus with an opening in the front plate, which guides another fuel into the interior of the combustion chamber.

If a rocket engine is to be used for a rather small thrust level and/or short thrust period, a plurality of injection elements brings a higher mass flow of the fluid components, which impedes the generation of a small and/or short thrust. Likewise, the coaxial injection elements allow the provision of a high mass flow of the fuel components into the combustion chamber due to the large opening area provided by a tubular element and surrounding annulus. It is, thus, necessary to minimise the size of each injection element, which, on the other hand, leads to difficulties in manufacturing the rocket engine and could lead to a decreased overall quality of such rocket engine. For instance, due to the high number of components that are to be produced with small or no manufacturing tolerances the likelihood for defects increases. US 4801092 A discloses another injection element for an engine from the prior art.

It is therefore an object of the present invention to provide an injection element for an engine, a front plate for an injector head and a method for manufacturing an injection element that increases the quality of the injection element and front plate, that is easy to manufacture, while still allowing miniaturising the injection element.

This object is achieved by an injection element with the features of claim 1, a front plate with the features of claim 8, and a method with the steps of claim 9. Preferred embodiments are defined by the dependent claims.

According to a first aspect of the invention, as claimed in claim 1, an injection element for an engine comprises a first fuel duct for a first fuel component extending in a longitudinal direction, and a plurality of second fuel ducts for a second fuel component arranged around the first fuel duct. The injection element can be employed in a rocket engine or rocket drive. The first and second fuel component can be liquid fuels that are mixed and evaporated in the combustion chamber, for example, a fuel and oxidant. The first and second fuel component can likewise be gaseous and/or cryogenic fuels, for example, hydrogen (H2) and oxygen (O2).

The injection element further comprises a plurality of bores, wherein each of the plurality of bores intersects with at least one duct of the plurality of second fuel ducts and further intersects with another bore of the plurality of bores. Intersecting means that a space defined by the bore overlaps or migrates with a space defined by the second fuel duct and the other bore. A bore can, thus, form a duct for the second fuel component. For example, each of the plurality of bores forms a supply line (supply duct) for the second fuel component, which can be supplied through the bore into the second fuel duct, with which the bore intersects. The intersecting second fuel duct may open out into the respective bore. In other words, one end of the second fuel duct is arranged at the intersection with the respective bore, to achieve a fluid connection between second fuel duct and bore. The intersecting second fuel duct forms a T-shaped intersection with the bore, i.e. the second fuel duct does not cross the bore and extends on two sides of the bore, but extends only from one side of the bore. Likewise, a bore intersecting with another bore, forms a T-shaped intersection with the other bore, and does not cross the other bore. A T-shaped intersection as used herein is not restricted to an intersection of two elements meeting at a right angle. In other words, the two intersecting elements (e.g., a second fuel duct and a bore or two bores) each have a longitudinal extension, the direction of which may form an angle of 90° as well as an angle other than a 90° with the longitudinal direction of the other intersecting element.

Such injection element can be integrally formed, i.e. is made from one piece. Thus, gaps and slits between two components can be omitted. The lack of multiple pieces put or mounted together to form an injection element reduces the risk of low-quality injection elements due to manufacturing tolerances of the multiple pieces.

The injection element can be employed with a front plate of an injector head for a combustion chamber, which solely requires an orifice for each injection element. Thus, the number of components required to form an injector head for a rocket engine is significantly reduced, irrespective of the desired size of the injection element. The injection element as disclosed further allows the provision of a front plate of an injector head that is integrally formed with a plurality of injection elements. In other words, the first and the second fuel ducts as well as the bores of a plurality of injection elements can be formed in a single workpiece.

Furthermore, since each of the bores intersects with a second fuel duct and another bore, the plurality of bores forms a manifold for guiding and distributing the second fuel component in a uniform manner over the plurality of second fuel ducts. This distribution of the second fuel component via the plurality of bores still allows a hydraulic decoupling of the fluid (fuel) provided to the injection element and further guided to the front plate of an injector head.

In an implementation variant, the plurality of second fuel ducts can be arranged along a circle, which is coaxially arranged to a longitudinal centre axis of the first fuel duct. For instance, the first fuel duct may have any arbitrary cross-section, and the longitudinal centre axis runs through the centroid or geometric centre of the cross-section, such as a circular cross-section and its radial centre. Each of the plurality of bores can extend along a tangent or secant of the circle. Depending on the number of second fuel ducts, with which the bore intersects, a longitudinal axis of the bore forms a tangent of the circle (intersecting with one second fuel duct) or a secant (intersecting with more than one second fuel duct).

Optionally, the plurality of bores can be arranged radially symmetrically. In other words, an angle between two adjacent and intersecting bores equals an angle between at least another pair of intersecting bores. Alternatively, every second angle of intersecting bores is the same, while the angle of intersecting bores inbetween differs.

In another implementation variant, at least one of the second fuel ducts can be formed to extend in a direction parallel to the longitudinal direction of the first fuel duct. Thus, the at least one second fuel duct intersects with a front face of the injection element at the same angle as the first fuel duct, for example at an angle of 90°.

Alternatively or additionally, at least one of the second fuel ducts can be formed to extend in a direction, which together with the longitudinal direction of the first fuel duct forms skew lines. In other words, the at least one second fuel duct intersects with a front face of the injection element in a non-perpendicular manner. This allows the second fuel component to exit the at least one second fuel duct (e.g., into a combustion chamber) in a swirl motion. Due to the extending direction of the at least one second fuel duct, and injection element can be provided that does not require a swirl component for the second fuel component.

In yet another implementation variant, one or more of the plurality of bores may have a cross-sectional area (e.g., a circular area) that is equal to or larger than a cross-sectional area of one duct of the plurality of second fuel ducts. This allows the respective bore to transport a mass flow of fuel corresponding to the mass flow of fuel through the second fuel duct, for example, if the bore intersects with only one second fuel duct. Of course, if the bore intersects with more than one second fuel duct, the possible mass flow of fuel through the bore has to correspond to the maximum possible mass flow of fuel through the number of second fuel ducts fluidly connected to the bore. This requires a larger cross-sectional area of the bore than of a bore intersecting with only one second fuel duct. Moreover, a larger cross-sectional area of the bore can also facilitate a fluid connection with the at least one second fuel duct. On the one hand, it includes a certain manufacturing tolerance, so that the complete cross-sectional area of the second fuel duct opens into the space delimited by the bore.

In yet another implementation variant, each of the plurality of bores can be arranged in a plane perpendicular to the longitudinal direction. In other words, each of the plurality of bores is arranged in a plane formed by a radius around the longitudinal direction.

In a further implementation variant, each of the plurality of bores can have a first opening forming an inlet for the second fuel component and a second opening at an opposite end of the bore, wherein the second opening opens into the other bore. For instance, the first opening may be arranged at a side surface of the injection element. The side surface of the injection element may be arranged in an area of the injector head, where the second fuel component is provided. Thus, the second fuel component can enter the bore through the first opening and can flow through the bore towards the other bore as well as into the at least one second fuel duct intersecting with the bore.

In an implementation variant, the plurality of bores can form a polygonal manifold surrounding the first fuel duct and fluidly connecting each of the plurality of the second fuel ducts. If each bore of the plurality of bores intersects with one other bore of the plurality of bores, a ring-shaped manifold is formed. In case each bore has a straight longitudinal form (between the first and second opening of the bore), a polygonal manifold is formed. This manifold has a number of inlets corresponding to the number of bores, particularly corresponding to the number of first openings in the side surface of the injection element.

In another implementation variant, at least some of the plurality of bores can have a curved form, so that a quasi-circular manifold is formed. This allows increasing the angle at the intersection between two bores, which further improves a uniform distribution of the second fuel component over the plurality of second fuel ducts and decreases pressure losses at the intersections between two bores.

In a further implementation variant, the injection element can comprise a front face, at which the first fuel duct forms an outlet for the first fuel component, and an orifice surrounding the outlet of the first fuel duct. In other words, the first fuel duct ends at the front face and forms an opening, and the orifice is a groove or recess in the front face surrounding the outlet of the first fuel duct. The front face of the injection element is a surface of the injection element facing the combustion chamber when installed in an injector head, for example, in the front plate of an injector head. Furthermore, each of the plurality of second fuel ducts can have an outlet opening into the orifice. For instance, the orifice may have a bottom face that is opposite the front face of the injection element (in other words that has the greatest distance to the front face of the injection element). Each second fuel duct ends at the bottom face of the orifice and forms an opening therein, which is the outlet of the second fuel duct.

The orifice may have any shape. The orifice may have a shape corresponding to the arrangement of the plurality of second fuel ducts. For instance, the orifice may be a circular orifice or groove, if the second fuel ducts are arranged on a circle. The orifice may also have a polygonal shape, for example, corresponding to a shape of the manifold formed by the plurality of bores.

According to another aspect of the invention, as claimed in claim 8, a front plate for an injector head may comprise at least one injection element according to the first aspect.

In an implementation variant, the front plate and the at least one injection element are integrally formed, i.e., the front plate and the at least one injection element form a one-piece element.

According to a further aspect of the invention, as claimed in claim 9, a method for manufacturing an injection element may comprise the following steps:
- providing an injection element body;
- forming a first fuel duct extending in a longitudinal direction;
- forming a plurality of second fuel ducts around the first fuel duct; and
- machining a plurality of bores, wherein each of the plurality of bores intersects with at least one duct of the plurality of second fuel ducts and further intersects with another bore of the plurality of bores.

This way of manufacturing an injection element is fast and cost-effective, since providing ducts and bores can be less time intensive than mounting multiple pieces together.

Furthermore, providing the injection element body may comprise providing a one-piece element. Thus, the injection element (and hence the injection element body) is formed of a single piece of material. The first and second fuel ducts and bores are formed/machined into this one-piece element. Since no plurality of components have to be mounted together to build the injection element, higher quality standards can be met even for smaller injection elements.

In an implementation variant, forming the first fuel duct and/or forming a plurality of second fuel ducts comprises drilling or electro-eroding the respective fuel duct into the injection element body. For instance, the first and second fuel ducts can be formed from a front face of the injection element, and may further be perpendicularly arranged with respect to the front face of the injection element. Drilling or electro-eroding is fast and cost-effective, particularly, if the first and second fuel ducts as well as the bores are straight in a longitudinal direction and have a circular cross-sectional shape. On the other hand, if at least one of the first fuel duct and/or at least one of the plurality of the second fuel ducts and/or at least one of the bores requires a curved shape and/or a non-circular cross-sectional shape electro-eroding can be applied as a fast manufacturing method.

Alternatively or additionally, the injection element body and, hence, the injection element can be formed by an additive layer manufacturing method, wherein no material is added at portions forming the first fuel duct and/or the plurality of second fuel ducts and/or the plurality of bores. An additive layer manufacturing method allows forming the first fuel duct and/or the plurality of the second fuel ducts and/or the plurality of bores in any arbitrary shape.

In an implementation variant, forming the plurality of the second fuel ducts may comprise forming the plurality of second fuel ducts along a circle, which is coaxially arranged to a longitudinal centre axis of the first fuel duct, and wherein each of the plurality of bores extends along a tangent or secant of the circle. For instance, the plurality of bores may extend within a plane perpendicular to the longitudinal centre axis of the first fuel duct. Forming the plurality of second fuel ducts may further comprise forming the plurality of second fuel ducts in a manner, so that they intersect with the respective bore at an angle of 90°. Of course, the plurality of second fuel ducts may also be formed, so that they intersect with the respective bore at an angle other than 90°, e.g. at an angle between 30° to 150°.

In another implementation variant, machining the plurality of bores may comprise machining a bore from a side surface of the injection element body to the other bore, with which it intersects, and forming a fluid connection between a first opening of the machined bore at the side surface and a second opening at an opposite end opening into the other bore. The first bore may be machined, so that it has a particular length. The end of this first bore opposite the side surface of the injection element is arranged at a future intersection with another bore. Alternatively, the first bore is machined to have a first length that is shorter than a final length of the first bore, while the rest of the first bore is machined after the bore, with which the first bore intersects, has been formed. All subsequently machined bores can be machined from the side surface of the injection element body to the first or subsequently formed bore, while forming a fluid connection to this first or subsequently formed bore at the respective intersection. The last machined bore is machined from the side surface of the injection element, intersecting with the first bore (neighbouring bore) and then intersecting with the second to last bore (neighbouring bore on the other side).

In a further implementation variant, forming the first fuel duct comprises machining the first fuel duct from a front face of the injection element body and forming an outlet for a first fuel component. The front face of the injection element body may be arranged at an angle to the side face of the injection element body. For example, the front face may be arranged perpendicularly to the side face of the injection element body. The outlet of the first fuel duct for the first fuel component is an opening of the first fuel duct at the front face.

In yet a further implementation variant, the method can comprise forming an orifice in the front face of the injection element body surrounding the outlet of the first fuel duct. The orifice may be machined, for example milled, into the injection element body beginning on the front face.

Furthermore, forming the plurality of second fuel ducts can comprise forming an outlet of each second fuel duct opening into the orifice. Forming the outlet may include machining the second fuel duct from a bottom face of the orifice into the injection element body. Of course, the plurality of second fuel ducts may be machined first, so that the outlet of each second fuel duct is formed when machining the orifice into the front face of the injection element body.

In another implementation variant, forming the plurality of second fuel ducts can comprise forming at least one of the second fuel ducts to extend in a direction parallel to the longitudinal direction of the first fuel duct. Thus, the at least one second fuel duct intersects with a front face of the injection element at the same angle as the first fuel duct, for example at an angle of 90°.

Alternatively or additionally, forming the plurality of second fuel ducts can comprise forming at least one of the second fuel ducts to extend in a direction, which together with the longitudinal direction of the first fuel duct forms skew lines. In other words, the at least one second fuel duct intersects with a front face of the injection element in a non-perpendicular manner. This allows the second fuel component to exit the at least one second fuel duct (e.g., into a combustion chamber) in a swirl motion.

In yet another implementation variant, machining the plurality of bores comprises drilling at least one of the plurality of bores or electro-eroding at least one of the plurality of bores. The drilling or electro-eroding is applied to the injection element body. For example, machining the plurality of bores may start at the side surface of the injection element body.

The present disclosure is not restricted to the aspects and variants in the described form and order. Specifically, the description of aspects and implementation variants is not to be understood as a specific limiting grouping of features. It is to be understood that the present disclosure also covers combinations of the aspects and variants not explicitly described. Thus, each variant or optional feature can be combined with any other aspect, variant, optional feature or even combinations thereof.

Preferred embodiments of the invention are now explained in greater detail with reference to the enclosed schematic drawings, in which
- Figure 1: schematically illustrates a perspective view of a partially cut open injection element;
- Figure 2: schematically illustrates a cross section of an injection element;
- Figure 3: schematically illustrates a perspective view of a portion of an injection element with ducts and bores;
- Figure 4: schematically illustrates a perspective view of a virtual body of the ducts and bores of an injection element;
- Figure 5: schematically illustrates a plan view on a front plate of an injector head with a plurality of injection elements; and
- Figure 6: schematically illustrates a flow diagram of a method for manufacturing an injection element.

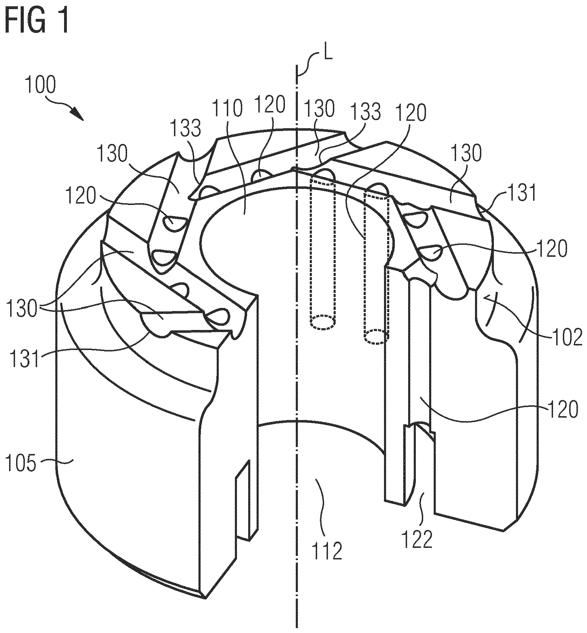

Figure 1 schematically illustrates a perspective view of a partially cut open injection element 100. The injection element 100 is cut open along a cross-sectional plane as well as along two planes intersecting with a longitudinal centre axis L, leaving approximately three quarter of the cut open injection element portion 100.

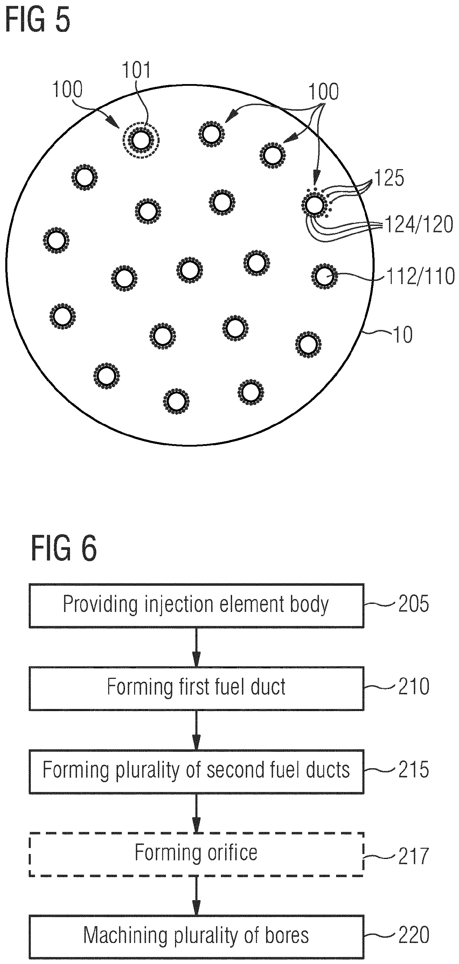

An injection element 100 comprises a first fuel duct 110 for a first fuel component extending in the longitudinal direction L. The first fuel duct 110 may have a circular cross-sectional shape and may be formed by machining an injection element body 105, for example, by drilling the first fuel duct 110 into the injection element body 105. The first fuel duct 110 has a longitudinal centre axis L, which may be arranged approximately perpendicularly to a front face 101 (Figure 5) of the injection element 100. The front face 101 may face a combustion chamber of a rocket engine into which the injection element 100 may be mounted.

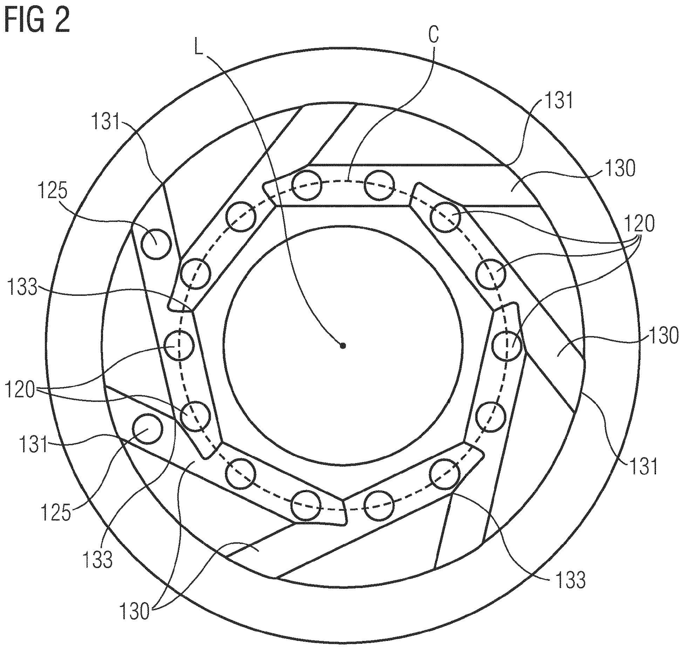

The injection element 100 further comprises a plurality of second fuel ducts 120 for a second fuel component. The second fuel ducts 120 surround the first fuel duct 110, for example along a circle C (Figure 2). The second fuel ducts 120 may also be machined from the front face 101 of the injection element 100. In addition, an orifice or recess 122 in the front face 101 may be provided surrounding an outlet 112 of the first fuel duct 110. Each of the plurality of second fuel ducts 120 has an outlet 124 opening into the orifice 122. Thus, the first and second fuel components can be guided through the respective first and second fuel ducts 110, 120 into a combustion chamber arranged adjacent to the front face 101.

The injection element 100 also has a plurality of bores 130, each of which intersects with at least one duct 120 of the plurality of second fuel ducts 120. Each of the plurality of bores 130 further intersects with another bore 130. In other words, each of the plurality of bores 130 has a first opening 131 forming an inlet for the second fuel component at a side surface 102 of the injection element 100. Each bore 130 further has a second opening 133 at an end of the bore 130 opposite to the first opening 131. The second opening 133 opens into the other bore 130, with which the bore 130 intersects. Thus, a manifold is formed by the plurality of bores 130. The manifold is fluidly connected with each of the second fuel ducts 120 at the respective intersection between a bore 130 and a second fuel duct 120.

Figure 2 schematically illustrates a cross-section of an injection element 100 cut through a plane, in which the plurality of bores 130 is arranged. The cutting plane of Figure 2 may lie at a widest point of each of the plurality of bores 130, e.g., in case of circular cross-sections of the bores 130, the cutting plane goes through the longitudinal centre axis of each bore 130. The plurality of second fuel ducts 120 can be arranged along a circle C that is coaxially arranged to a longitudinal centre axis L of the first fuel duct 110. In order to achieve easy to manufacture bores 130, each of the plurality of bores 130 has a straight extension along a tangent or secant of the circle C. As is illustrated in Figure 2, each of the plurality of bores 130 forms a secant of the circle C, so that each bore 130 intersects with two second fuel ducts 120. Thus, the plurality of bores forms a polygonal manifold surrounding the first fuel duct 110. The manifold fluidly connects each of the plurality of second fuel ducts 120 with one another as well as with a region surrounding the side surface 102 of the injection element 100. The number of second fuel ducts 120, the number of bores 130 as well as the number of second fuel ducts 120 intersecting with one bore 130 of the plurality of bores 130 is not limited to the schematic illustration of Figure 2.

A cross-sectional area of each of the second fuel ducts 120 may be smaller than a cross-sectional area of the bore 130, with which it intersects. As illustrated in Figure 2, the maximum width of the bore 130 is larger than the maximum width of the second fuel duct 120. This allows manufacturing tolerances as well as the provision of a sufficiently large mass flow of second fuel component into the second fuel duct 120. In case a bore 130 intersects with more than two second fuel ducts 120, the maximum width of the bore 130 may even be larger, in order to cover the entire arc (circular segment) on which the second fuel ducts 120 are arranged. This is to ensure that each second fuel duct 120 fully opens into the bore 130.

In addition to the second fuel ducts 120 arranged on the circle C, the injection element 100 can further comprise at least one third fuel duct 125 (one of which is illustrated in Figure 2) for the second fuel component. The at least one third fuel duct 125 can be arranged in the injection element 100, so that it intersects with one bore 130 of the plurality of bores 130. For instance, the third fuel duct(s) 125 may be arranged at a greater distance to the longitudinal centre axis L of the first fuel duct 110 than the distance of each of the plurality of second fuel ducts 120 to the longitudinal centre axis L of the first fuel duct 110. The intersection of a third fuel duct 125 with a bore 130 may be arranged, for example, between the first opening 131 of the bore 130 and an intersection of the bore 130 with another bore 130. Furthermore, the third fuel duct(s) 125 can be arranged parallel to the plurality of second fuel ducts 120.

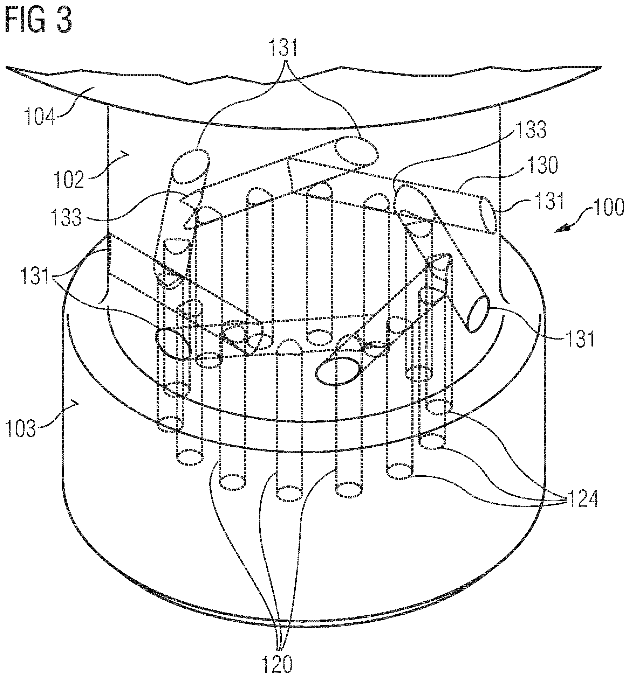

Figure 3 schematically illustrates a perspective view of a portion of an injection element 100, wherein the plurality of second fuel ducts 120 and the plurality of bores 130 is drawn with dashed lines. The injection element 100 has a bottom portion 103, which may be coupled to a front plate 10 (Figure 5) of an injector head (not illustrated). Adjacent to the bottom portion 103 is the side surface 102, which may not be coupled to or covered by the front plate 10. The space surrounding the side surface 102 of the injection element 100 can form part of a chamber for the second fuel component in an injector head. Each first opening 131 of each bore 130 is arranged on the side surface 102 and, hence, opens into the second fuel component chamber. This allows provision of the second fuel component into the manifold formed by the plurality of bores 130, and further into each of the second fuel ducts 120 intersecting with the bores 130. At each intersection between a second fuel duct 120 and a bore 130, a fluid communication is achieved by the second fuel duct 120 opening into the respective bore 130. At an opposite end of the second fuel duct 120 an outlet 124 is formed, which faces a combustion chamber.

As illustrated in Figure 3, the injection element 100 may further comprise an upper portion 104 arranged adjacent to the side surface 102 on an opposite side of the bottom portion 103. Through this upper portion 104 the first fuel duct 110 may run, in order to be fluidly connected to another chamber of the injector head for the first fuel component. For instance, the upper portion 104 may be connected to a separating plate (not illustrated) arranged parallel to the front plate 10. Thus, the chamber for the second fuel component is delimited by the front plate 10 and the separating plate, while the chamber for the first fuel component is delimited by the separating plate on an opposite side and further components of the injector head (not illustrated). The first fuel duct 110 fluidly connects the chamber for the first fuel component with the combustion chamber (at the opening 112 of the first fuel duct 110), while the bores 130 and second fuel ducts 120 fluidly connect the chamber for the second fuel component with the combustion chamber (at the openings 124 of the second fuel ducts 120).

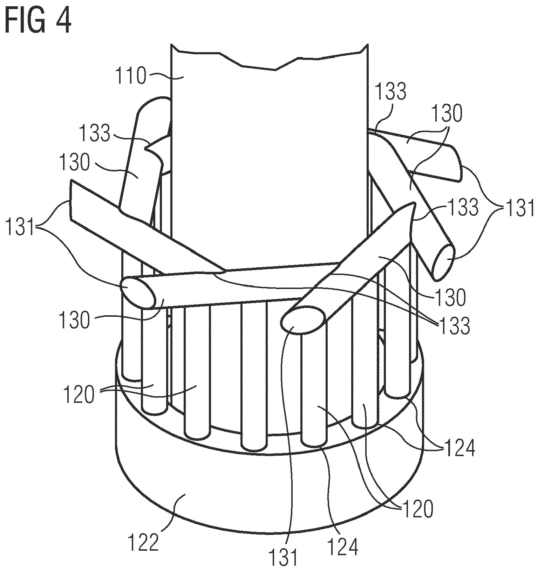

Figure 4 schematically illustrates a perspective view of a virtual body of the first and second fuel ducts 110, 120 and bores 130 of an injection element 100. In other words, Figure 4 schematically illustrates an inverse body showing the actually empty space formed by the fluidly connected second fuel ducts 120 and bores 130 as well as the empty space formed by the first fuel duct 110. In addition, the virtual body of Figure 4 further includes the empty space formed by the orifice 122, into which each of the second fluid duct 120 opens at opening 124.

As is illustrated in Figure 4, the plurality of bores 130 forms a polygonal manifold surrounding the first fuel duct 110. The manifold is formed by the fluid connection between a pair of adjacent bores 130 via the second opening 133 of a bore 130 at an intersection with an adjacent other bore 130. Each of the plurality of bores 130 is arranged in a plane perpendicular to the longitudinal direction, i.e. the longitudinal centre axis L, of the first fuel duct 110. Each of the plurality of bores 130, hence, forms a radial tangential path for the second fluid component.

The plurality of second fuel ducts 120 illustrated in Figure 4 run parallel to the first fuel duct 110, and particularly parallel to the longitudinal centre axis L (Figure 1) of the first fuel duct 110. Alternatively or additionally, at least one of the second fuel ducts 120 may form a skew line with the longitudinal centre axis L. In other words, the at least one second fuel duct 120 is not arranged perpendicularly to the front face 101 of the injection element 100 (Figure 4 illustrates a perpendicular arrangement of all second fuel ducts 120). Due to the angle between the longitudinal direction of the at least one second fuel duct 120 and the front face 101, and also the front plate 10, the second fuel component exiting the at least one a second fuel duct 120 at opening 124 will create a swirl motion of the second fuel component in the combustion chamber. Such skew second fuel duct 120 (not illustrated) may be arranged in a manner that its inlet (intersection with a bore 130) and its opening 124 have approximately the same distance from the longitudinal centre axis L of the first fuel duct 110. Alternatively, the distance of the opening 124 the longitudinal centre axis L the distance of the inlet of the second fuel duct 120 may differ, in order to achieve a different swirl motion of the second fuel component exiting at opening 124.

Figure 5 schematically illustrates a plan view on a front plate 10 of an injector head (not illustrated) with a plurality of injection elements 100. Each of the injection elements 100 has an outlet 112 of its first fuel duct 110, through which the first fuel component can flow into the injector head, i.e. into a combustion chamber. The outlet 112 of the first fuel duct 110 is surrounded by the respective outlets 124 of the plurality of second fuel ducts 120. In order to increase clarity of Figure 5, the optional orifice 122 is not illustrated.

Furthermore, as indicated in Figure 2, a third fuel duct 125 for the second fuel component may be arranged in at least some of the injection elements 100, one of which is illustrated in Figure 5. The third fuel duct 125 fluidly connects a bore 130 with the front face 101 of the injection element 100. In addition, the third fuel ducts 125 are only illustrated as surrounding a portion of the outlet 112 of the first fuel duct 110, which is one of multiple options. For instance, the third fuel ducts 125 may be arranged at a portion of the injection element 100, which is closest to an outer circumference of the front plate 10 of the injector head. This allows introducing the second fuel component through the third fuel ducts 125, in order to form a cooling layer or film at a side of the injector head and combustion chamber. Alternatively or additionally, the third fuel ducts 125 may be arranged around the entire first fuel duct 110 of the injection element 100. This provides for a greater mass flow of second fuel component into the combustion chamber and/or provides for a more uniform distribution of the second fuel component into the combustion chamber.

Figure 6 schematically illustrates a flow diagram of a method for manufacturing an injection element 100, such as the injection element 100 described with respect to Figures 1 to 5. The method starts with providing 205 an injection element body 105, such as the one partially illustrated in Figure 1 or 3. The injection element body 105 may be a one-piece element.

Subsequently in step 210 first fuel duct 110 is formed in the injection element body 105. The first fuel duct 110 is formed extending in the longitudinal direction, such as the longitudinal centre axis L (Figure 1). The first fuel duct 110 may be formed by machining the first fuel duct 110 from a front face 101 of the injection element body 105 towards an opposite end of the injection element body 105. Thereby, an outlet 112 for the first fuel component is formed at the front face 101. Machining the first fuel duct 110 may include drilling, milling, and/or electro-eroding.

Furthermore, in step 215, a plurality of second fuel ducts 120 around the first fuel duct 110 is formed. As with the first fuel duct 110, forming the plurality of second fuel ducts 120 may include drilling, milling, and/or electro-eroding. The forming of the plurality of second fuel ducts 120 may include forming the second fuel ducts 120 along a circle C, which is coaxially arranged to the longitudinal centre axis L of the first fuel duct 110.

In step 220 of the method, a plurality of bores 130 is machined. Machining the plurality of bores 130 may include drilling, milling, and/or electro-eroding. Each of the plurality of bores 130 is machined in such a way that it intersects with at least one duct 120 of the plurality of second fuel ducts 120 and further intersects with another bore 130 of the plurality of bores 130. For instance, machining a bore 130 may comprise machining the bore 130 from a side surface 102 of the injection element body 105 to the other bore 130, with which it intersects. Thus, a fluid connection is formed between a first opening 131 of the machined bore 130 at the side surface 102 and a second opening 133 at an opposite end of the bore 130, the second opening 133 opening into the other bore 130.

In an optional step 217, an orifice 122 may be formed in the front face 101 of the injection element body 105 surrounding the outlet 112 of the first fuel duct 110. Forming (215) the plurality of second fuel ducts 120 can comprise forming an outlet 124 of each second fuel duct 120, the outlet 124 opening into the orifice 122.

## Claims

1. An injection element (100) for an engine, the injection element (100) comprising:
- a first fuel duct (110) for a first fuel component extending in a longitudinal direction;
- a plurality of second fuel ducts (120) for a second fuel component arranged around the first fuel duct (110), and
- a plurality of bores (130), **characterized in that** each of the plurality of bores (130) intersects with at least one duct (120) of the plurality of second fuel ducts (120) and further intersects with another bore (130) of the plurality of bores (130).

2. The injection element (100) according to claim 1, wherein the plurality of second fuel ducts (120) are arranged along a circle (C), which is coaxially arranged to a longitudinal centre axis (L) of the first fuel duct (110), and wherein each of the plurality of bores (130) extends along a tangent or secant of the circle (C).

3. The injection element (100) according to claim 1 or 2, wherein each of the plurality of bores (130) is arranged in a plane perpendicular to the longitudinal direction.

4. The injection element (100) according to one of claims 1 to 3, wherein each of the plurality of bores (130) has a first opening (131) forming an inlet for the second fuel component and a second opening (133) at an opposite end of the bore (130), wherein the second opening (133) opens into the other bore (130).

5. The injection element (100) according to one of claims 1 to 4, wherein the plurality of bores (130) forms a polygonal manifold surrounding the first fuel duct (110) and fluidly connecting each of the plurality of the second fuel ducts (120).

6. The injection element (100) according to one of claims 1 to 5, further comprising:
- a front face (101), at which the first fuel duct (110) forms an outlet (112) for the first fuel component; and
- an orifice (122) surrounding the outlet (112) of the first fuel duct (110),
wherein each of the plurality of second fuel ducts (120) has an outlet (124) opening into the orifice (122).

7. The injection element (100) according to one of claims 1 to 6, wherein the injection element (100) is formed integrally.

8. A front plate (10) for an injector head, comprising at least one injection element (100) according to one of claims 1 to 7.

9. A method for manufacturing an injection element (100), the method comprising:
- providing (205) an injection element body (105);
- forming (210) a first fuel duct (110) extending in a longitudinal direction;
- forming (215) a plurality of second fuel ducts (120) around the first fuel duct (110); and
- machining (220) a plurality of bores (130), wherein each of the plurality of bores (130) intersects with at least one duct (120) of the plurality of second fuel ducts (120) and further intersects with another bore (130) of the plurality of bores (130).

10. The method according to claim 9, wherein the injection element body (105) is a one-piece element.

11. The method according to claim 9 or 10, wherein forming the plurality of the second fuel ducts (120) comprises forming the plurality of second fuel ducts (120) along a circle (C), which is coaxially arranged to a longitudinal centre axis (L) of the first fuel duct (110), and wherein each of the plurality of bores (130) extends along a tangent or secant of the circle (C).

12. The method according to one of claims 9 to 11, wherein machining the plurality of bores (130) comprises machining a bore (130) from a side surface (102) of the injection element body (105) to the other bore (130), with which it intersects, and forming a fluid connection between a first opening (131) of the machined bore (130) at the side surface (102) and a second opening (133) at an opposite end opening into the other bore (130).

13. The method according to one of claims 9 to 12, wherein forming the first fuel duct (110) comprises machining the first fuel duct (110) from a front face (101) of the injection element body (105) and forming an outlet (112) for a first fuel component.

14. The method according to claim 13, further comprising:
- forming (217) an orifice (122) in the front face (101) of the injection element body (105) surrounding the outlet (112) of the first fuel duct (110),
wherein forming the plurality of second fuel ducts (120) comprises forming an outlet (124) of each second fuel duct (120) opening into the orifice (122).

15. The method according to one of claims 9 to 14, wherein machining the plurality of bores (130) comprises drilling at least one of the plurality of bores (130) or electro-eroding at least one of the plurality of bores (130).

## Patentansprüche

1. Einspritzelement (100) für einen Motor, wobei das Einspritzelement (100) umfasst:
- einen ersten Treibstoffkanal (110) für eine erste Treibstoffkomponente, der sich in einer Längsrichtung erstreckt;
- eine Mehrzahl von zweiten Treibstoffkanälen (120) für eine zweite Treibstoffkomponente, die um den ersten Treibstoffkanal (110) herum angeordnet sind; und
- eine Mehrzahl von Bohrungen (130),
**dadurch gekennzeichnet, dass**
jede der Mehrzahl von Bohrungen (130) sich mit mindestens einem Kanal (120) der Mehrzahl von zweiten Treibstoffkanälen (120) schneidet und sich ferner mit einer anderen Bohrung (130) der Mehrzahl von Bohrungen (130) schneidet.

2. Einspritzelement (100) nach Anspruch 1, wobei die Mehrzahl von zweiten Treibstoffkanälen (120) entlang eines Kreises (C) angeordnet sind, der koaxial zu einer Längsmittelachse (L) des ersten Treibstoffkanals (110) angeordnet ist, und wobei sich jede der Mehrzahl von Bohrungen (130) entlang einer Tangente oder Sekante des Kreises (C) erstreckt.

3. Einspritzelement (100) nach Anspruch 1 oder 2, wobei jede der Mehrzahl von Bohrungen (130) in einer Ebene senkrecht zur Längsrichtung angeordnet ist.

4. Einspritzelement (100) nach einem der Ansprüche 1 bis 3, wobei jede der Mehrzahl von Bohrungen (130) eine erste Öffnung (131), die einen Einlass für die zweite Treibstoffkomponente bildet, und eine zweite Öffnung (133) an einem gegenüberliegenden Ende der Bohrung (130) aufweist, wobei die zweite Öffnung (133) in die andere Bohrung (130) mündet.

5. Einspritzelement (100) nach einem der Ansprüche 1 bis 4, wobei die Mehrzahl von Bohrungen (130) einen polygonalen Verteiler bildet, der den ersten Treibstoffkanal (110) umgibt und jeden der Mehrzahl von zweiten Treibstoffkanälen (120) fluidisch verbindet.

6. Einspritzelement (100) nach einem der Ansprüche 1 bis 5, ferner umfassend:
- eine Stirnfläche (101), an der der erste Treibstoffkanal (110) einen Auslass (112) für die erste Treibstoffkomponente bildet; und
- eine Öffnung (122), die den Auslass (112) des ersten Treibstoffkanals (110) umgibt,
wobei jeder der Mehrzahl von zweiten Treibstoffkanälen (120) einen Auslass (124) aufweist, der in die Öffnung (122) mündet.

7. Einspritzelement (100) nach einem der Ansprüche 1 bis 6, wobei das Einspritzelement (100) einstückig ausgebildet ist.

8. Frontplatte (10) für einen Einspritzkopf, die mindestens ein Einspritzelement (100) nach einem der Ansprüche 1 bis 7 aufweist.

9. Verfahren zur Herstellung eines Einspritzelements (100), wobei das Verfahren umfasst:
- Bereitstellung (205) eines Einspritzelementkörpers (105);
- Ausbilden (210) eines ersten Treibstoffkanals (110), der sich in einer Längsrichtung erstreckt;
- Ausbilden (215) einer Mehrzahl von zweiten Treibstoffkanälen (120) um den ersten Treibstoffkanal (110); und
- Erstellen (220) einer Mehrzahl von Bohrungen (130), wobei jede der Mehrzahl von Bohrungen (130) sich mit mindestens einem Kanal (120) der Mehrzahl von zweiten Treibstoffkanälen (120) schneidet und sich ferner mit einer anderen Bohrung (130) der Mehrzahl von Bohrungen (130) schneidet.

10. Verfahren nach Anspruch 9, wobei der Einspritzelementkörpers (105) ein einteiliges Element ist.

11. Verfahren nach Anspruch 9 oder 10, wobei das Ausbilden der Mehrzahl von zweiten Treibstoffkanälen (120) das Ausbilden der Mehrzahl von zweiten Treibstoffkanälen (120) entlang eines Kreises (C) umfasst, der koaxial zu einer Längsmittelachse (L) des ersten Treibstoffkanals (110) angeordnet ist, und wobei sich jede der Mehrzahl von Bohrungen (130) entlang einer Tangente oder Sekante des Kreises (C) erstreckt.

12. Verfahren nach einem der Ansprüche 9 bis 11, wobei das Erstellen der Mehrzahl von Bohrungen (130) das Erstellen einer Bohrung (130) von einer Seitenfläche (102) des Einspritzelementkörpers (105) zu der anderen Bohrung (130), mit der sie sich schneidet, und das Bilden einer Fluidverbindung zwischen einer ersten Öffnung (131) der erstellten Bohrung (130) an der Seitenfläche (102) und einer zweiten Öffnung (133) an einem gegenüberliegenden Ende, die in die andere Bohrung (130) mündet, umfasst.

13. Verfahren nach einem der Ansprüche 9 bis 12, wobei das Ausbilden des ersten Treibstoffkanals (110) das Erstellen des ersten Treibstoffkanals (110) von einer Vorderfläche (101) des Einspritzelementkörpers (105) und das Ausbilden eines Auslasses (112) für eine erste Treibstoffkomponente umfasst.

14. Verfahren nach Anspruch 13, ferner umfassend:
- Ausbilden (217) einer Öffnung (122) in der vorderen Fläche (101) des Einspritzelementkörpers (105), die den Auslass (112) des ersten Treibstoffkanals (110) umgibt,
wobei das Bilden der Mehrzahl von zweiten Treibstoffkanälen (120) das Bilden eines Auslasses (124) jedes zweiten Treibstoffkanals (120), der in die Öffnung (122) mündet, umfasst.

15. Verfahren nach einem der Ansprüche 9 bis 14, wobei das Erstellen der Mehrzahl von Bohrungen (130) ein Bohren mindestens einer der Mehrzahl von Bohrungen (130) oder das Elektroerodieren mindestens einer der Mehrzahl von Bohrungen (130) umfasst.

## Revendications

1. Élément d'injection (100) pour un moteur, l'élément d'injection (100) comprenant :
- un premier conduit de carburant (110) pour un premier composant de carburant s'étendant dans une direction longitudinale ;
- une pluralité de seconds conduits de carburant (120) pour un second composant de carburant agencés autour du premier conduit de carburant (110), et
- une pluralité d'alésages (130), **caractérisés en ce que** chacun de la pluralité d'alésages (130) croise au moins un conduit (120) de la pluralité de seconds conduits de combustible (120) et croise en outre un autre alésage (130) de la pluralité d'alésages (130).

2. Élément d'injection (100) selon la revendication 1, dans lequel la pluralité de seconds conduits de carburant (120) sont agencés le long d'un cercle (C), qui est agencé coaxialement à un axe central longitudinal (L) du premier conduit de carburant (110), et dans lequel chacun de la pluralité d'alésages (130) s'étend le long d'une tangente ou sécante du cercle (C).

3. Élément d'injection (100) selon la revendication 1 ou 2, dans lequel chacun de la pluralité d'alésages (130) est agencé dans un plan perpendiculaire à la direction longitudinale.

4. Élément d'injection (100) selon l'une des revendications 1 à 3, dans lequel chacun de la pluralité d'alésages (130) présente une première ouverture (131) formant une entrée pour le second composant de carburant et une seconde ouverture (133) au niveau d'une extrémité opposée de l'alésage (130), dans lequel la seconde ouverture (133) débouche dans l'autre alésage (130).

5. Élément d'injection (100) selon l'une des revendications 1 à 4, dans lequel la pluralité d'alésages (130) forme un collecteur polygonal entourant le premier conduit de carburant (110) et reliant fluidiquement chacun de la pluralité des seconds conduits de carburant (120).

6. Élément d'injection (100) selon l'une des revendications 1 à 5, comprenant en outre :
- une face avant (101), au niveau de laquelle le premier conduit de carburant (110) forme une sortie (112) pour le premier composant de carburant ; et
- un orifice (122) entourant la sortie (112) du premier conduit de carburant (110),
dans lequel chacun de la pluralité de seconds conduits de carburant (120) a une sortie (124) débouchant dans l'orifice (122).

7. Élément d'injection (100) selon l'une des revendications 1 à 6, dans lequel l'élément d'injection (100) est formé d'un seul tenant.

8. Plaque avant (10) pour tête d'injecteur, comprenant au moins un élément d'injection (100) selon l'une des revendications 1 à 7.

9. Procédé de fabrication d'un élément d'injection (100), le procédé comprenant :
- la fourniture (205) d'un corps d'élément d'injection (105) ;
- la formation (210) d'un premier conduit de carburant (110) s'étendant dans une direction longitudinale ;
- la formation (215) d'une pluralité de seconds conduits de carburant (120) autour du premier conduit de carburant (110) ; et
- l'usinage (220) d'une pluralité d'alésages (130), dans lequel chacun de la pluralité d'alésages (130) croise au moins un conduit (120) de la pluralité de seconds conduits de carburant (120) et croise en outre un autre alésage (130) de la pluralité d'alésages (130).

10. Procédé selon la revendication 9, dans lequel le corps d'élément d'injection (105) est un élément monobloc.

11. Procédé selon la revendication 9 ou 10, dans lequel la formation de la pluralité des seconds conduits de carburant (120) comprend la formation de la pluralité de seconds conduits de carburant (120) le long d'un cercle (C), qui est agencé coaxialement à un axe central longitudinal (L) du premier conduit de carburant (110), et dans lequel chacun de la pluralité d'alésages (130) s'étend le long d'une tangente ou d'une sécante du cercle (C).

12. Procédé selon l'une des revendications 9 à 11, dans lequel l'usinage de la pluralité d'alésages (130) comprend l'usinage d'un alésage (130) depuis une surface latérale (102) du corps d'élément d'injection (105) jusqu'à l'autre alésage (130), avec lequel il se croise, et la formation d'une connexion fluidique entre une première ouverture (131) de l'alésage usiné (130) au niveau de la surface latérale (102) et une seconde ouverture (133) à une extrémité opposée débouchant dans l'autre alésage (130).

13. Procédé selon l'une des revendications 9 à 12, dans lequel la formation du premier conduit de carburant (110) comprend l'usinage du premier conduit de carburant (110) à partir d'une face avant (101) du corps d'élément d'injection (105) et la formation d'une sortie (112) pour un premier composant de carburant.

14. Procédé selon la revendication 13, comprenant en outre :
- la formation (217) d'un orifice (122) dans la face avant (101) du corps d'élément d'injection (105) entourant la sortie (112) du premier conduit de carburant (110),
dans lequel la formation de la pluralité de seconds conduits de carburant (120) comprend la formation d'une sortie (124) de chaque second conduit de carburant (120) débouchant dans l'orifice (122).

15. Procédé selon l'une des revendications 9 à 14, dans lequel l'usinage de la pluralité d'alésages (130) comprend le perçage d'au moins l'un de la pluralité d'alésages (130) ou l'électro-érosion d'au moins l'un de la pluralité d'alésages (130).
